# EUROPEAN PATENT APPLICATION

(11) **EP 1 837 826 A1**
(43) Date of publication of application: **26.09.2007**
(21) Application number: 06005663.7
(22) Date of filing: 20.03.2006
(51) Int. Cl.: G06T 5/00

(54) **Image acquisition considering super-resolution post-interpolation**

(71) Applicant: MATSUSHITA ELECTRIC INDUSTRIAL CO., LTD., Osaka 571-8501 (JP)
(72) Inventor: Wedi, Thomas Dr., Panasonic R & D Center, 63225 Langen (DE)
(74) Representative: Grünecker, Kinkeldey, Stockmair & Schwanhäusser Anwaltssozietät

(57) **Abstract**

The present invention relates to an image acquisition and reproduction system considering super-resolution interpolation of acquired images. By providing an aliasing control filter for controlling aliasing artifacts rather than removing them, an improved image quality is achieved while leaving the option for reconstructing high-resolution images by means of super-resolution interpolation techniques. A preferred embodiment of the present invention relates to hierarchical video data compression and decompression with improved coding efficiency. The video data is encoded into two bitstreams. The first bitstream is a self-contained representation of a low-resolution version of the video data. The second bitstream only contains the difference between the full-resolution video data and its super-resolution reconstruction.

## Description

The present invention relates to image acquisition considering super-resolution interpolation of acquired images, and in particular to an improved method and corresponding apparatuses for hierarchical video compression.

### BACKGROUND OF THE INVENTION

Recently, methods for converting a sequence of low-resolution images into a higher-resolution image or sequence have attracted considerable interest among computer scientists and image processing specialists. These methods are commonly referred to as super-resolution interpolation or super-resolution reconstruction. The basic idea behind super-resolution is to exploit sub-pixel movements of image components within the sequence of low-resolution images to reconstruct image details that are not apparent from any of these images by itself.

Super-resolution techniques are particularly interesting in the context of image acquisition, since they might provide an efficient way to improve image resolution without employing costly high-performance imaging devices.

Digital image acquisition systems usually suffer from a limitation of the resolution provided by the imaging device. Apart from practical restrictions with respect to details that can or cannot be discerned in the sampled image, the limited sampling resolution can also lead to disturbing artifacts, such as Moiré patterns. These artifacts are a consequence of sampling an original image containing fine patterns with a resolution that is not high enough to faithfully reproduce these patterns. This is an example of the well-known effect of aliasing in undersampled signals. Therefore, conventional digital image acquisition systems apply an anti-aliasing filter before sampling the image in order to prevent these disturbing artifacts. The anti-aliasing filter basically blurs the original image so as to remove those patterns that are too fine to be sampled anyway and thus prevents formation of Moire patterns. In this conventional approach, however, details removed by the anti-aliasing filter are permanently lost and cannot be reconstructed by super-resolution techniques.

### SUMMARY OF THE INVENTION

The present invention aims at providing an improved image acquisition apparatus and a corresponding method for suppressing aliasing artifacts while allowing for super-resolution post-interpolation.

This is achieved by the features as set forth in the independent claims.

Preferred embodiments are the subject matter of dependent claims.

It is the particular approach of the present invention to controllably suppress image frequencies beyond the Nyquist frequency of the image sampling resolution in order to reduce aliasing artifacts while allowing for super-resolution post-interpolation.

According to a first aspect of the present invention, an image acquisition and reproduction apparatus is provided. The image acquisition and reproduction apparatus comprises a sampling means for sampling input images with a predefined sampling resolution in order to obtain a plurality of low-resolution digital images, an output unit for outputting the plurality of low-resolution digital images, an aliasing control filter for filtering the input images prior to sampling in order to attenuate image frequencies higher than the Nyquist frequency of the predefined sampling resolution, a super-resolution reconstruction means for reconstructing a high-resolution digital image from the plurality of low-resolution digital images, the reconstructed high-resolution digital image having a reconstruction resolution that is higher than the predefined sampling resolution, wherein the output unit is outputting either one of the high-resolution digital image and the plurality of low-resolution digital images.

According to a further aspect of the present invention, a method for acquiring and reproducing images is provided. The method comprises the steps of sampling input images with a predefined sampling resolution in order to obtain a plurality of low-resolution digital images, outputting the plurality of low-resolution digital images, filtering the input images prior to sampling in order to attenuate image frequencies higher than the Nyquist frequency of the predefined sampling resolution, super-resolution reconstructing a high-resolution digital image from the plurality of low-resolution digital images, the reconstructed high-resolution digital image having a reconstruction resolution that is higher than the predefined sampling resolution, wherein the outputting step is outputting either one of the high-resolution digital image and the plurality of low-resolution digital images.

Preferably, the image acquisition and reproduction apparatus further comprises a de-attenuation filter with a filter characteristics inverse to the aliasing control filter for amplifying image frequencies of the high-resolution digital image that have been attenuated by the aliasing control filter. In this way, the effect of the aliasing control filter on high image frequencies can be reverted thus leading to sharper images.

Prefereably, a filtering characteristics of the aliasing control filter is set adaptively to a content of the input images. The optimum damping factor for the aliasing controlling filter depends on the image content, e.g. on the amount of fine details at image frequencies close to the Nyquist frequency. By adapting the aliasing controlling filter to the image content, visible aliasing artifacts can be suppressed in the low-resolution digital images while leaving as much information as possible for super-resolution interpolation.

Preferably, the plurality of low-resolution digital images corresponds to a video sequence. In this manner, the plurality of low-resolution images can be easily recorded by a video camera. Moreover, images taken by a video camera most likely contain sub-pixel shifts with respect to each other thus providing the basis for super-resolution interpolation.

Preferably, the super-resolution reconstruction means is reconstructing a plurality of high-resolution digital images, said plurality of high-resolution digital images corresponding to a high-resolution reconstruction of the video sequence. In this manner, the image acquisition and reproduction apparatus can record a low-resolution video sequence and output a high-resolution version of the very same sequence.

According to a further aspect of the present invention, a video encoding apparatus for encoding an input video signal is provided. The encoding apparatus comprises a down-sampling means for reducing the spatial resolution of the input video signal to a predefined sampling resolution, a first encoder for encoding the down-sampled video signal into a first bitstream corresponding to a low-resolution version of the input video signal and for outputting the first bitstream as a first output of the video encoding apparatus, a decoder for decoding the first bitstream, an up-sampling means for creating a reconstructed high-resolution video signal from the decoded first bitstream, the reconstructed high-resolution video signal having a reconstruction resolution that is equal to the resolution of the input video signal, a subtracting means for subtracting the up-sampled decoded first bitstream from the input video signal and for outputting a difference signal, a second encoder for encoding the difference signal into a second bitstream and for outputting the second bitstream as a second output of the video encoding apparatus, an aliasing control filter for filtering the input video signal prior to the down-sampling in order to attenuate image frequencies higher than the Nyquist frequency of the predefined sampling resolution, wherein the up-sampling means is a super-resolution reconstruction means for reconstructing the high-resolution video signal from the decoded first bitstream.

According to a further aspect of the present invention, a method for encoding an input video signal is provided. The method comprises the steps of down-sampling the spatial resolution of the input video signal to a predefined sampling resolution, encoding the down-sampled video signal into a first bitstream corresponding to a low-resolution version of the input video signal and outputting the first bitstream, decoding the first bitstream, creating a reconstructed high-resolution video signal from the decoded first bitstream, the reconstructed high-resolution video signal having a reconstruction resolution that is equal to the resolution of the input video signal, subtracting the reconstructed high-resolution video signal from the input video signal and outputting a difference signal, encoding the difference signal into a second bitstream and outputting the second bitstream, filtering the input video signal prior to the step of down-sampling in order to attenuate image frequencies higher than the Nyquist frequency of the predefined sampling resolution, wherein the step of creating the high-resolution video signal is a super-resolution reconstruction step, reconstructing the high-resolution video signal from the decoded first bitstream.

Preferably, the video encoding apparatus further comprises a de-attenuation filter with a filter characteristics inverse to the aliasing control filter for amplifying image frequencies of the high-resolution video signal that have been attenuated by the aliasing control filter, and wherein the subtracting means is subtracting the output of the de-attenuation filter from the input video signal in order to output the difference signal. Thereby, the effect of the aliasing control filter on high image frequencies can be reverted thus creating a reconstructed high-resolution video signal with improved sharpness. In this way, the amount of data that has to be encoded in the second bitstream can be reduced leading to an improved overall coding efficiency.

Preferably, a filtering characteristics of the aliasing control filter is set adaptively to a content of the input video signal. In this manner, visible aliasing artifacts can be suppressed in the low-resolution digital video signal while leaving as much information as possible for super-resolution interpolation.

Preferably, information of the filtering characteristics of the aliasing control filter is signaled to a decoder. Preferably, the information of the filtering characteristics is inserted in the second bitstream. Preferably, the information of the filtering characteristics comprises a list of filter coefficients. Preferably, the information of the filtering characteristics comprises a threshold frequency and a damping factor. The decoder is thus able to decode the high-resolution digital video signal even when the filter characteristics of the aliasing control filter and the de-attenuation filter on the encoder side were adapted.

Preferably, motion vector information detected by the decoder is fed to the super-resolution reconstruction means as an input for reconstructing the high-resolution video signal. Information on sub-pixel movements between consecutive images is required for super-resolution interpolation. This information can be extracted from the motion vector information as it has already been determined in the course of motion compensation. In this manner, the computational efficiency can be improved.

Preferably, the video encoding apparatus further comprises a bitstream multiplexer for multiplexing the first and the second bitstream into an output bitstream representing the input video signal. In this way, the encoded video data can easily be transmitted through a single communication channel or stored to a storage medium.

Preferably, at least one of the first and the second encoder encodes an input signal into a bitstream according to a transform-based video compressing standard. Transform-based video encoders, such as MPEG-II or H.264/AVC encoders, are state-of-the-art and provide optimum performance and coding efficiency.

According to a further aspect of the present invention, a video decoding apparatus for decoding an encoded video signal is provided. The decoding apparatus comprises a first decoder for decoding a first bitstream representing a low resolution version of the encoded video signal and for outputting a first decoded video signal, an up-sampling means for creating a reconstructed high-resolution video signal from the first decoded video signal, the reconstructed high-resolution video signal having a reconstruction resolution that is equal to the resolution of the encoded video signal, a second decoder for decoding a second bitstream representing a difference signal and for outputting the difference signal, an adding means for adding the reconstructed high-resolution video signal and the difference signal and for outputting a second decoded video signal, wherein the up-sampling means is a super-resolution reconstruction means for reconstructing the high-resolution video signal from the first decoded video signal.

According to a further aspect of the present invention, a method for decoding an encoded video signal is provided. The method comprises the steps of decoding a first bitstream representing a low resolution version of the encoded video signal and outputting a first decoded video signal, creating a reconstructed high-resolution video signal from the first decoded video signal, the reconstructed high-resolution video signal having a reconstruction resolution that is equal to the resolution of the encoded video signal, decoding a second bitstream representing a difference signal and outputting the difference signal, adding the reconstructed high-resolution video signal and the difference signal and outputting a second decoded video signal, wherein the step of creating the high-resolution video signal is a super-resolution reconstruction step, reconstructing the high-resolution video signal from the first decoded video signal.

Preferably, the decoding apparatus further comprises a de-attenuation filter with a filter characteristics that is adapted for amplifying image frequencies of the high-resolution video signal that have been attenuated by an aliasing control filter of an encoder, and wherein the adding means is adding the output of the de-attenuation filter and the difference signal in order to output the second decoded video signal. This is required for decoding video data that has been encoded by an encoder using such a de-attenuation filter for reconstructing the high-resolution reference video signal. In this manner, higher coding efficiencies can be achieved by more effectively removing redundancies in the video signal that is to be encoded.

Preferably, the filtering characteristics of the de-attenuation filter is set in accordance to information of the filtering characteristics signaled by the encoder. Preferably, the information of the filtering characteristics is extracted from the second bitstream. Preferably, the information of the filtering characteristics comprises a list of filter coefficients. Preferably, the information of the filtering characteristics comprises a threshold frequency and a damping factor. The decoder is thus able to adapt its de-attenuation in order to optimize the quality of the high-resolution digital video signal.

Preferably, motion vector information (MV) detected by the first decoder is fed to the super-resolution reconstruction means as an input for reconstructing the high-resolution video signal. Information on sub-pixel movements between consecutive images is required for super-resolution interpolation. This information can be extracted from the motion vector information as it has already been determined in the course of motion compensation. In this manner, the computational efficiency can be improved.

Preferably, a bitstream de-multiplexer is used for de-multiplexing an input bitstream representing the encoded video signal into the first and the second bitstream. ln this manner, encoded video data that has been transmitted through a single transmission channel or that has been stored to a storage medium can easily be decoded.

Preferably, at least one of the first and the second decoder decodes an input bitstream according to a transform-based video compressing standard. Obviously, the decoder has to adopt the same compressing standards as the encoder in order to be able to decode the encoded video signal.

The above and other objects and features of the present invention will become more apparent from the following description and preferred embodiments given in conjunction with the accompanying drawings, in which:
- Fig. 1a: is a block diagram of a conventional image acquisition system,
- Fig. 1b: is a block diagram of a conventional image acquisition system with anti-aliasing filtering,
- Fig. 2a: is a schematic diagram of an input signal in the spatial and the frequency domain,
- Fig. 2b: is a schematic diagram of a Dirac comb, as it is used in the sampling step, in the spatial and the frequency domain,
- Fig. 2c: is a schematic diagram of the sampled input signal in the spatial and the frequency domain,
- Fig. 3a: is a schematic diagram of an input signal in the spatial and the frequency domain,
- Fig. 3b: is a schematic diagram of a low pass filter in the spatial and the frequency domain,
- Fig. 3c: is a schematic diagram of the low-pass filtered input signal in the spatial and the frequency domain,
- Fig. 3d: is a schematic diagram of a Dirac comb, as it is used in the sampling step, in the spatial and the frequency domain,
- Fig. 3e: is a schematic diagram of the low-pass filtered and sampled input signal in the spatial and the frequency domain,
- Fig. 4a: is a block diagram of a conventional image acquisition system with super-resolution interpolation,
- Fig. 4b: is a block diagram of a conventional image acquisition system with super-resolution interpolation and anti-aliasing filtering,
- Fig. 5: is an illustration of the image registration and interpolation in super-resolution reconstruction,
- Fig. 6a: is a schematic diagram of a sampled input signal in the spatial and the frequency domain,
- Fig. 6b: is a schematic diagram of a resolution-enhanced signal in the spatial and the frequency domain,
- Fig. 6c: is a schematic diagram of a resolution-enhanced signal in the spatial and the frequency domain using super-resolution interpolation,
- Fig. 7a: is a schematic diagram of an anti-aliasing filtered and sampled input signal in the spatial and the frequency domain,
- Fig. 7b: is a schematic diagram of super-resolution interpolation applied to an anti-aliasing filtered and sampled input signal in the spatial and the frequency domain,
- Fig. 8: is a block diagram of an embodiment of the present invention,
- Fig. 9a: is a schematic diagram of an input signal in the spatial and the frequency domain,
- Fig. 9b: is a schematic diagram of a low pass filter in the spatial and the frequency domain according to an embodiment of the present invention,
- Fig. 9c: is a schematic diagram of the low-pass filtered input signal in the spatial and the frequency domain according to an embodiment of the present invention,
- Fig. 10a: is a schematic diagram of the low-pass filtered and sampled input signal in the spatial and the frequency domain according to an embodiment of the present invention,
- Fig. 10b: is a schematic diagram of the super-resolution interpolated input signal in the spatial and the frequency domain according to an embodiment of the present invention,
- Fig. 10c: is a schematic diagram of the de-attenuation filtered and super-resolution interpolated input signal in the spatial and the frequency domain according to an embodiment of the present invention,
- Fig. 11 a: shows the filtering characteristics of exemplary aliasing control and de-attenuation filters for damping factor 0.4 in accordance with an embodiment of the present invention,

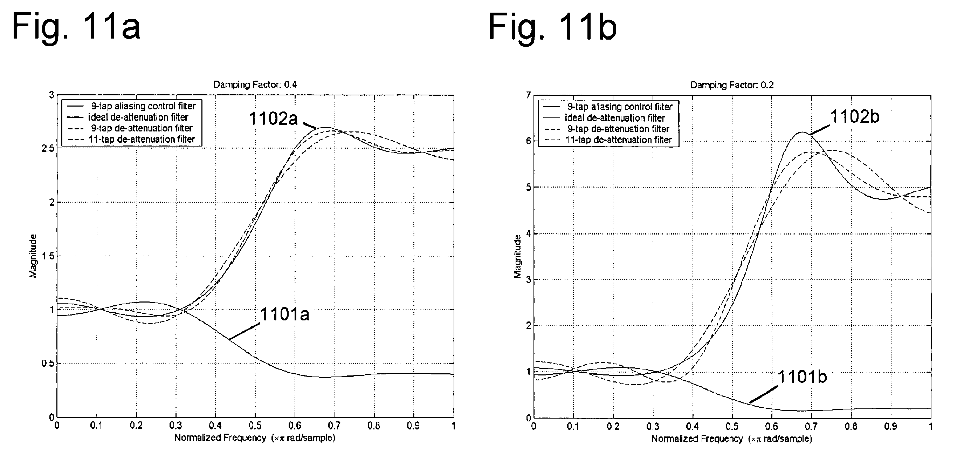

- Fig. 11 b: shows the filtering characteristics of exemplary aliasing control and de-attenuation filters for damping factor 0.2 in accordance with an embodiment of the present invention,

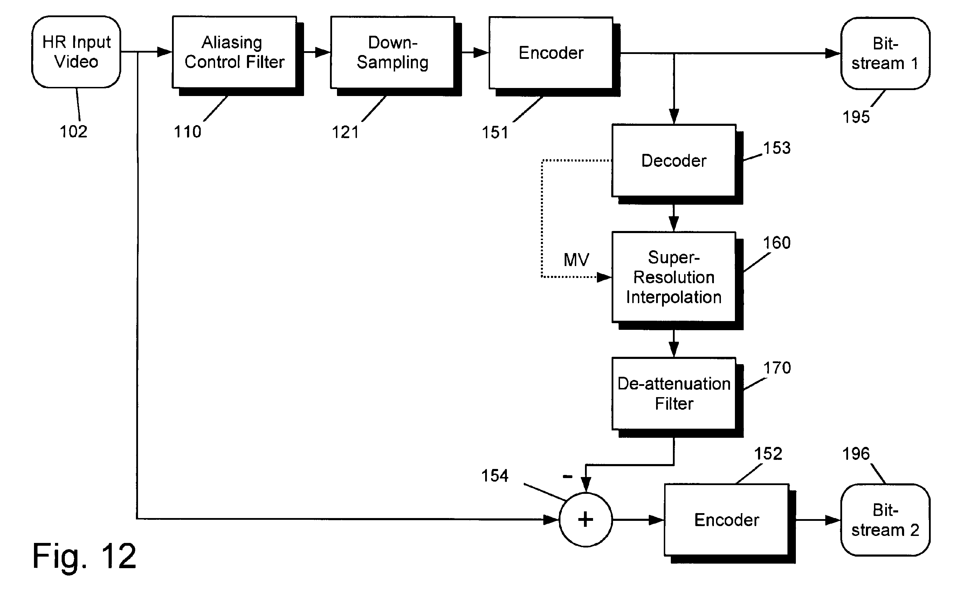

- Fig. 12: is a block diagram of a hierarchical video encoder according to an embodiment of the present invention,

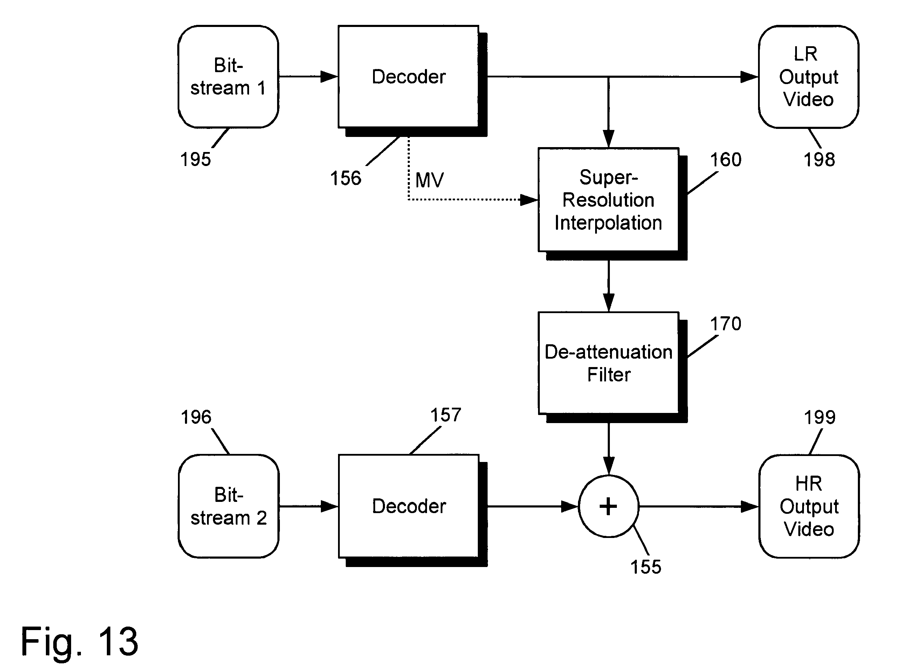

- Fig. 13: is a block diagram of a hierarchical video decoder according to an embodiment of the present invention.

### DETAILED DESCRIPTION

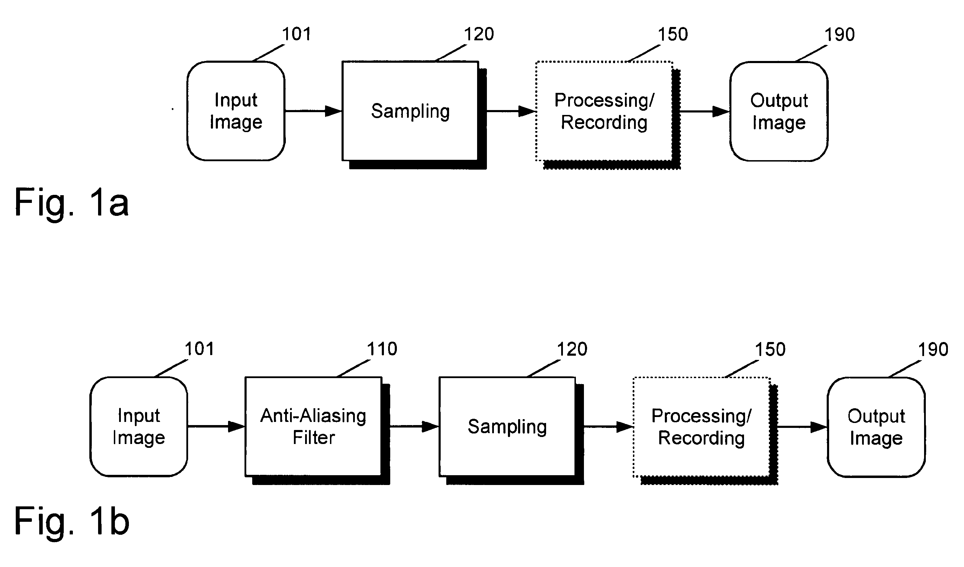

Referring to Fig. 1, conventional image acquisition and reproduction is explained.

As shown in Fig. 1 a, a sampling means 120 is sampling an input image 101 at a predetermined sampling resolution so as to produce a digital image that may be further processed or recorded in a processing/recording means 150. In case that the input image contains image frequencies higher than the Nyquist frequency of the sampling means, a problem of aliasing artifacts in the sampled image arises. This can be avoided by providing an anti-aliasing filter 110 as shown in Fig. 1 b. The anti-aliasing filter 110 is a low-pass filter that removes image frequencies beyond said Nyquist frequency prior to the sampling step. Hence, the conventional image acquisition and reproduction device shown in Fig. 1 b produces output images 190 free of disturbing aliasing artifacts.

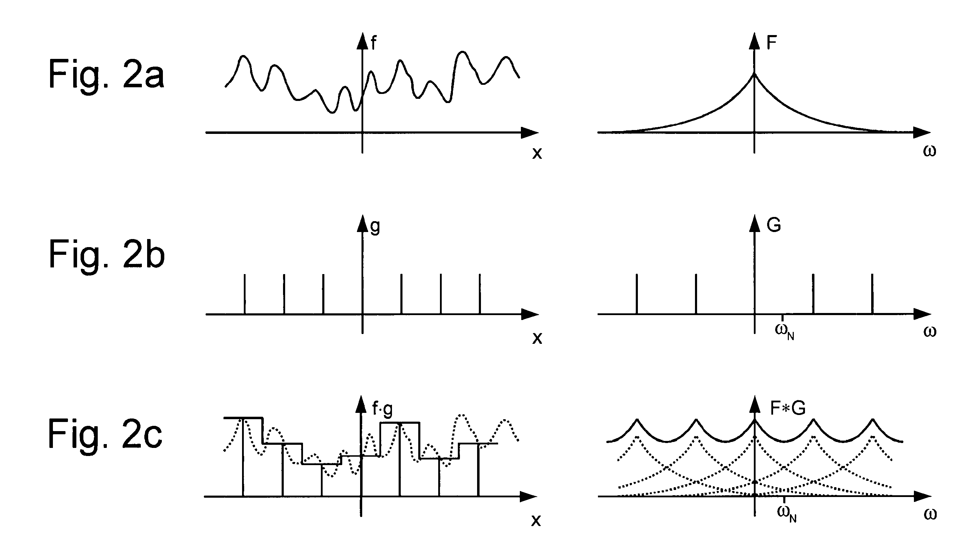

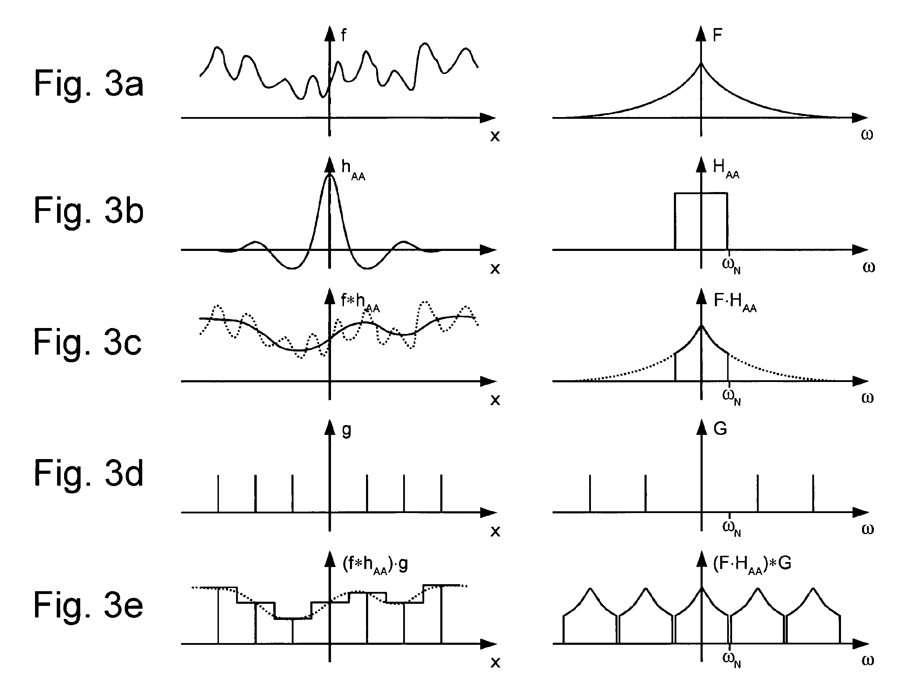

The function of the conventional anti-aliasing filtering is explained next with reference to Figs. 2 and 3. For the sake of simplicity, the explanation is restricted to a one-dimensional signal. The graphs shown on the left-hand side of Figs. 2 and 3 thus represent the signal in the spatial domain, whereas the graphs on the right-hand side represent the signal (Fourier-) transformed into the frequency domain.

Fig. 2a shows a rapidly varying signal f with an accordingly broad frequency spectrum F. Sampling this signal can be expressed as a multiplication with a Dirac comb g as represented schematically in Fig. 2b. Note that the Fourier transform of a Dirac comb is also a Dirac comb. Since multiplication of two signals in the spatial domain corresponds to a convolution of the transformed signals in the frequency domain, the spectrum of the sampled signal f·g takes the form as indicated on the right-hand side of Fig. 2c, i.e., the spectrum F*G of the sampled signal is the sum of the continuous spectrum translated and replicated periodically.

As it is apparent from Fig. 2c, the translated and replicated spectra overlap. The spectral power of the sampled signal at a certain frequency is thus contaminated by contributions from other frequencies that are a so-called alias to the certain frequency. In the spatial domain, aliasing becomes apparent by disturbing artifacts such as Moire patterns or pixel rasters instead of smooth contours.

In order to prevent aliasing it is thus necessary to prevent overlapping of the spectra in the step of sampling. This can be achieved by band-limiting the initial signal f by means of a low-pass filter h_{AA} as shown schematically in Fig. 3.

Fig. 3a represents the initial signal f and Fig. 3b the low-pass filter h_{AA} used for band-limiting the signal by convolving and multiplying the signal in the spatial and the frequency domain, respectively. Fig 3c shows the result f*h_{AA} of the low-pass filtering (solid line) in comparison to the initial signal f (dashed line).

As explained above, sampling corresponds to multiplication of the signal with a Dirac comb g in the spatial domain and to a convolution with the corresponding Dirac comb G in the frequency domain; cf. Fig. 3d. Since the spectrum of the signal has been band-limited, the translated and replicated spectra F.H_{AA} do no longer overlap (cf. Fig. 3e) so that no aliasing occurs.

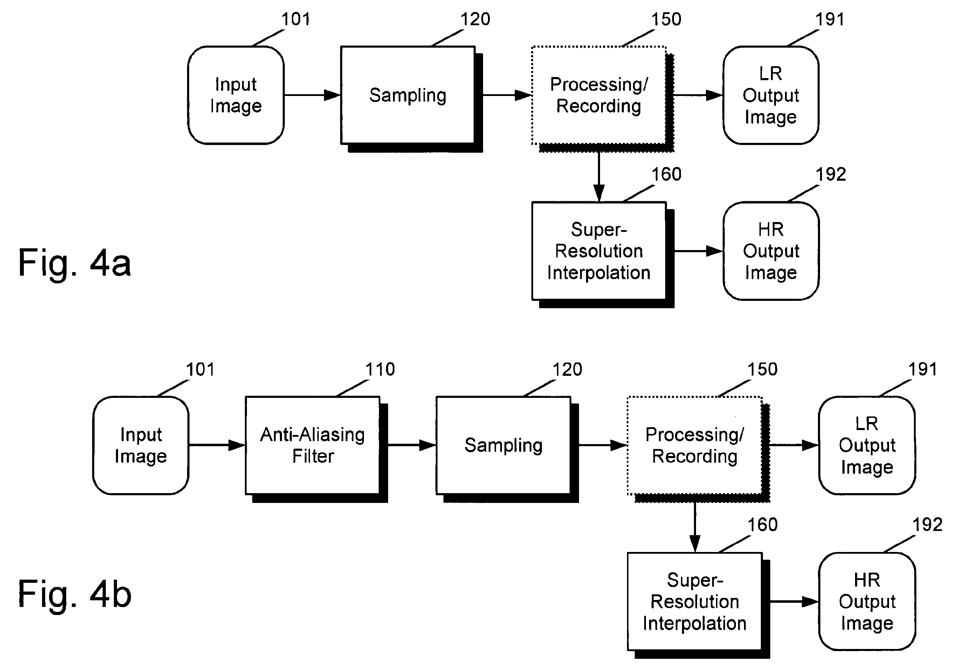

Conventional image acquisition systems with super-resolution interpolation are illustrated in Fig. 4. Figure 4a is a block diagram of such a conventional image acquisition system comprising a sampling means 120, a processing and recording unit 150, and a super-resolution interpolation unit 160. Input images 101 are feed to the sampling means 120 in order to produce digitized images that may be recorded in the processing and recording unit 150. Recorded images may be output with the original sampling resolution as a low-resolution (LR) output image 191. Alternatively, the recorded images may be subjected to super-resolution interpolation in order to output high-resolution (HR) images 192 at a resolution superior to the original sampling resolution.

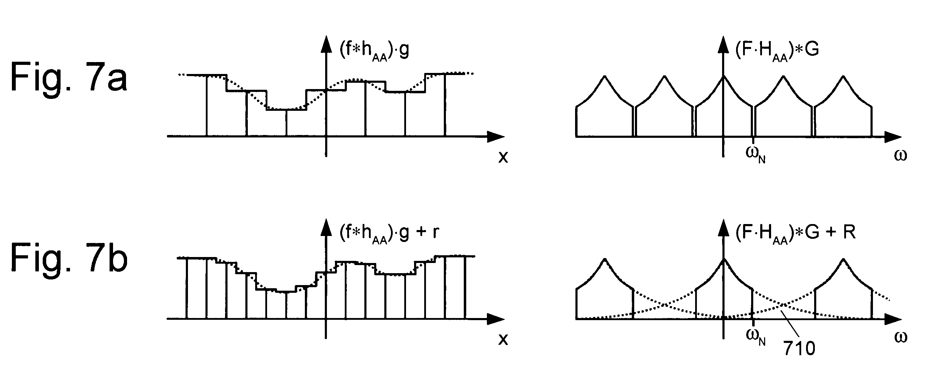

Figure 4b is a block diagram of a conventional image acquisition system similar to the system shown in Fig. 4a but with an additional anti-aliasing filter 110. The functionality provided by the system of Fig. 4b is similar to that of Fig. 4a except that the input images are filtered by an anti-aliasing filter 110 prior to sampling. Hence, the image quality of the low-resolution output images 191 is enhanced since aliasing artifacts are removed. However, due to the anti-aliasing filtering, the high-resolution images 192 output by the super-resolution interpolation unit 160 do not contain any image details that were not already apparent in the low-resolution images. The reasons for that are explained below in connection with Fig. 7.

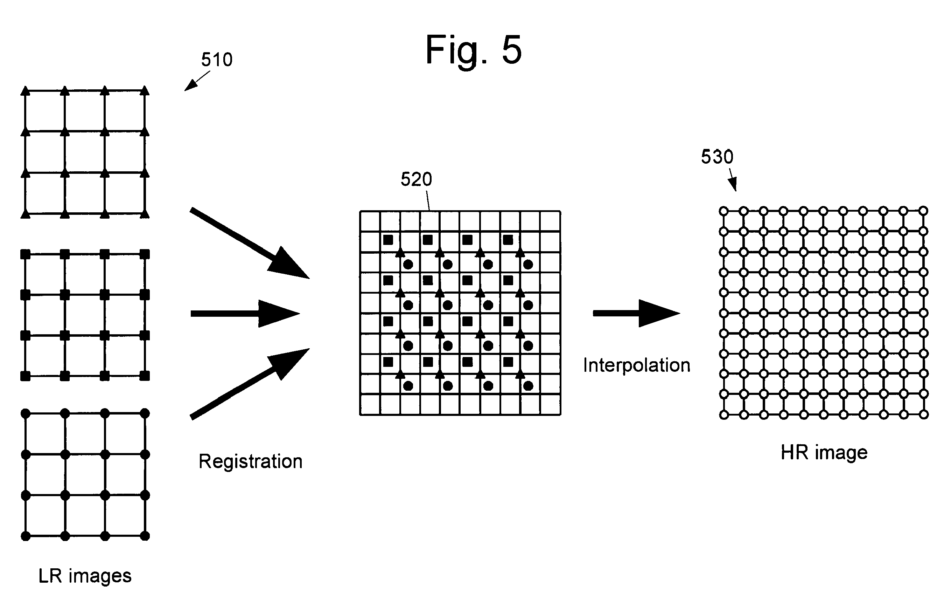

Referring to Fig. 5, super-resolution image reconstruction is explained next. A method for super-resolution image reconstruction is, for example, known from the European Patent Application EP 1 492 051.

Conventional super-resolution reconstruction methods basically consist of two steps. In a first step, a shift between low-resolution images 510 is estimated with sub-pixel precision. This can be achieved by means of motion estimation techniques. The thus estimated sub-pixel shift between individual images is then used to register the low-resolution images to a high-resolution grid 520.

In the second step, nonuniform interpolation techniques can be employed to obtain interpolated values for each point of the high-resolution grid 520 so as to produce a reconstructed high-resolution image 530.

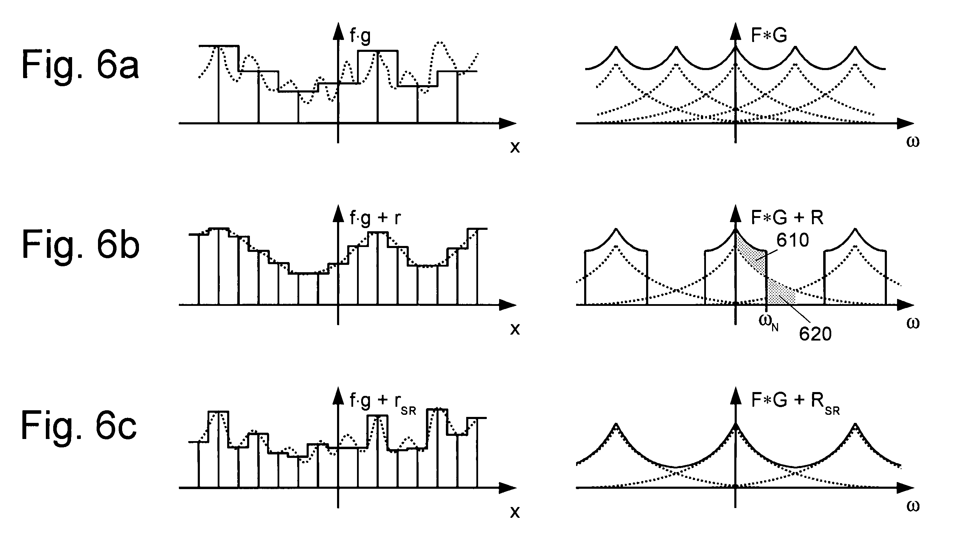

Fig. 6 schematically illustrates the effect of super-resolution interpolation in the spatial and the frequency domain. Fig. 6a shows an under-sampled signal f·g and the corresponding spectrum F*G with pronounced aliasing. Fig. 6b illustrates the result of increasing the resolution of the under-sampled signal by means of a conventional interpolation method. Due to the sampling theorem, the under-sampled signal does not contain any information regarding image frequencies higher than the Nyquist frequency ω_{N}. Hence, although the periodicity in the spectrum is reduced due to the up-sampling, the spectrum is zero for frequencies between the Nyquist frequency ω_{N} and its alias frequency (solid line on the right-hand side of Fig. 5b).

Super-resolution interpolation, however, can exploit the aliasing artifacts 610 in the up-sampled signal in order to reconstruct image frequencies 620 higher than the Nyquist frequency ω_{N} of the sampling means. As shown in Fig. 6c, the thus reconstructed signal resembles a signal that would have been obtained by sampling the original signal at the higher resolution in the first place.

Super-resolution interpolation is not in contradiction to the Sampling Theorem because the additional information is extracted from a plurality of low-resolution images with sub-pixel shifts as explained above. Summarizing, super-resolution interpolation can sort out aliasing components in the frequency domain and fill the gap beyond the Nyquist frequency so as to reconstruct image details at a resolution that is not apparent from any of the low resolution images taken for itself. Hence, aliasing artifacts are important for super-resolution interpolation.

On the other hand, aliasing artifacts may severely hamper motion estimation. A well known example of this problem are a carriage's spoke wheels, which appear to rotate in the wrong direction in a western. Although this effect is rather due to aliasing in the temporal domain, the same problem arises with under-sampling in the spatial domain. Therefore, it may be necessary to employ anti-aliasing filtering in order to be able to perform motion estimation, which is a prerequisite for super-resolution interpolation.

Figure 7 illustrates schematically the effect of employing an anti-aliasing filter as shown in Fig. 1b. Figure 7a exhibits the anti-aliasing filtered and sampled signal of Fig. 3e. Up-sampling this signal, i.e., adding additional sampling points r, leads to the spectrum shown on the right-hand side of Fig. 7b. Similar to the previous example of Fig. 6b, the periodicity of the signal in the frequency domain is reduced leaving a gap beyond the Nyquist frequency ω_{N} and its alias. In contrast to the previous example, however, high image frequencies have been removed by the anti-aliasing filter and thus have not been folded over to produce aliasing components. Hence, information related to these frequencies is irrevocably lost and cannot be reconstructed.

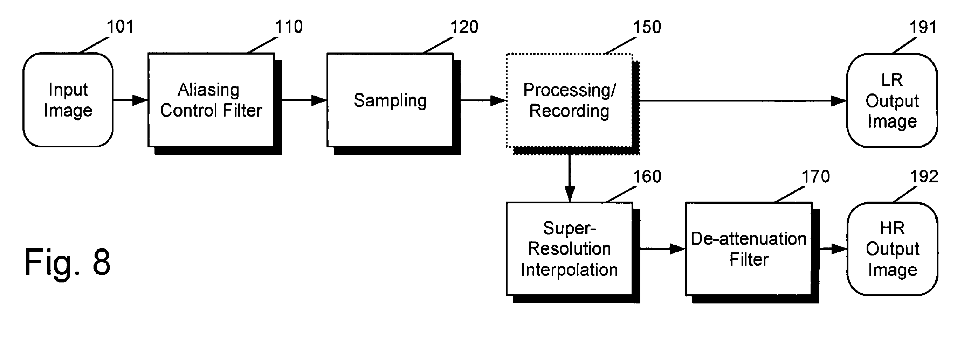

The present invention has been devised in order to avoid the above problems with conventional image acquisition systems. Figure 8 is a block diagram illustrating a first embodiment of the present invention. According to this embodiment, input images 101 are subjected to an aliasing control filter 110 prior to sampling. Input images may either be analogue images produced by an optical system or high-resolution digital images reproduced from a recording means or transmitted from another imaging device and the like. In order to allow for super-resolution interpolation of the sampled images, the aliasing control filter is not removing frequencies beyond the Nyquist frequency of the sampling means. Instead, image frequencies above the Nyquist frequency are attenuated in order to reduce disturbing aliasing artifacts in the low-resolution output images 191. Images thus sampled and recorded can then be used by a super-resolution interpolation unit 160 for creating high resolution output images at a resolution superior to the sampling resolution. The effect of the aliasing control filter on high image frequencies is reverted by a de-attenuation filter 170 prior to outputting the thus reconstructed high-resolution images 192.

Depending on the particular embodiment of the present invention, the aliasing control filter 110 may be implemented in form of an optical (blurring-)filter upstream of the image sensor, or a digital filter operating on digital image information with an input resolution higher than the sampling resolution. In the former case, the sampling unit 120 may be a digital image sensor such as a CCD; in the latter case, the sampling unit 120 may coincide with the aliasing control filter 110 in the sense that the aliasing control filter 110 outputs a filtered and down-sampled version of the input image 101.

Moreover, the low-resolution images 191 and/or the reconstructed high-resolution images 192 may be outputted by means of an output unit (not shown). Depending on the particular embodiment of the present invention, the output unit may be connected to a display device for displaying the output images, a storage means for storing the output images, an encoder/transmitter for encoding and transmitting the output images over a communications line, or an image processing means such as an image recognition or motion estimation unit, etc. Whether only low-resolution, only high-resolution, or both low- and high-resolution output images are outputted via the output unit may depend on requirements and capabilities of a down-stream device, such as display resolution, storage capacity, transmission bandwidth, computational performance, etc. A preferred embodiment will be discussed below in greater detail in the context of video processing.

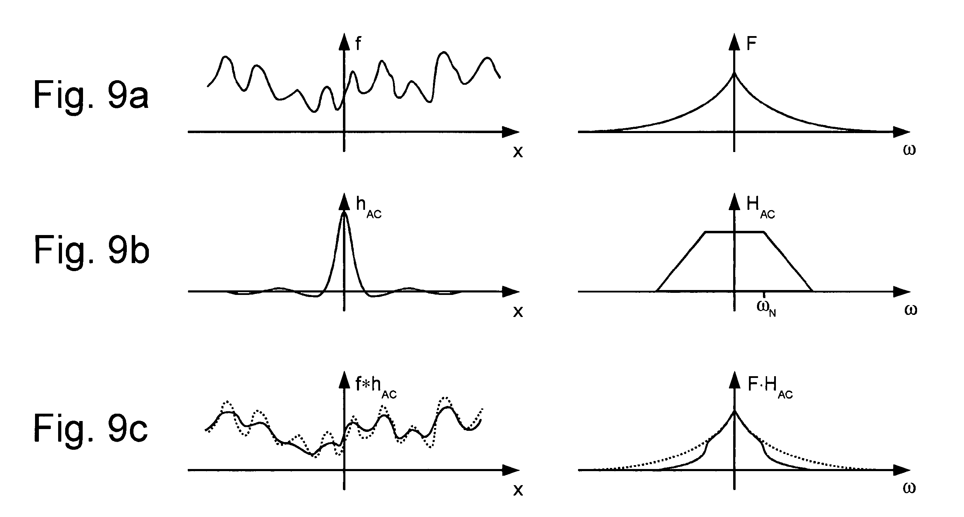

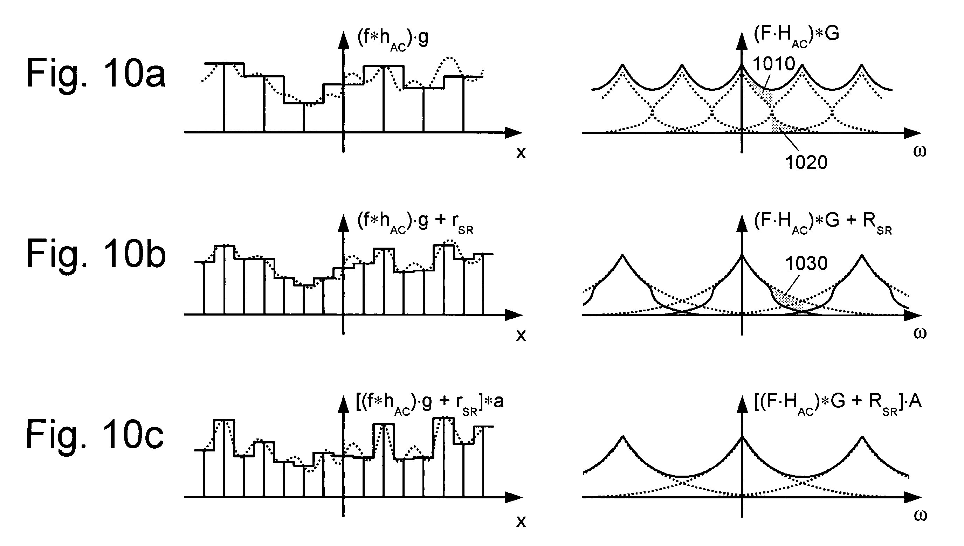

The effect of the present invention is explained in greater detail with reference to Figs. 9 and 10.

Figure 9 shows, along the lines of Fig. 3a-c, an input signal f (Fig. 9a), an aliasing control filter h_{AC} (Fig. 9b), and the result f*h_{AC} of filtering the input signal with the aliasing control filter (Fig. 9c). Note that the aliasing control filter is not totally removing frequencies beyond the Nyquist frequency ω_{N} of the sampling means. Instead, high image frequencies are attenuated by a frequency-dependent attenuation factor starting at unity (no attenuation) at the Nyquist frequency down to zero (removal) at a frequency that corresponds to the highest image frequency that can be represented by the resolution of the super-resolution interpolation means. Consequently, the impulse response h_{AC} of this filter in the spatial domain is narrower than the impulse response h_{AA} of the anti-aliasing filter shown in Fig. 3b. The input signal filtered by the aliasing control filter thus still comprises image frequencies beyond the Nyquist frequency, cf. Fig. 9c.

Figure 10a shows, in analogy to Fig. 3e, the result of sampling the thus filtered input signal. Because of the presence of image frequencies higher than the Nyquist frequency, the spectra of the filtered input signal overlap and aliasing occurs, cf. the shaded areas 1010 and 1020 in Fig. 10a. Due to the aliasing control filter, however, the amplitude of the aliasing artifacts is reduced accordingly. Hence, the thus obtained low-resolution images exhibit an improved image quality as compared to the low-resolution images output by the conventional image acquisition system of Fig. 4a.

Moreover, due to the suppression of aliasing artifacts, motion can be estimated more accurately on a sub-pixel level, which is required for the registration step of super-resolution interpolation. The remaining aliasing artifacts can be exploited by the super-resolution interpolation means to extract image details at a resolution superior to the sampling resolution. Ideally, aliasing in the frequency domain can be completely resolved leading to the reconstructed signal shown as a solid line in Fig. 10b.

However, the reconstructed signal still suffers from an attenuation of high image frequencies introduced by the aliasing control filter; cf. the shaded area 1030 in Fig. 10b. This is corrected by the de-attenuation filter that is amplifying those image frequencies so as to compensate the effect of the aliasing control filter. As a result, the original input signal can be reconstructed at a high resolution; cf. Fig. 10c.

In this description, the de-attenuation filter is described as being a separate unit accepting the output of the super-resolution interpolation means. However, the present invention is not restricted in this respect. Alternatively, the de-attenuation filter may as well be part of the super-resolution interpolation means, in particular part of its internal observation model that relates the original input signal to the observed low-resolution images.

The characteristics of the aliasing control filter shown in Fig. 9b is by way of example only and not supposed to restrict the present invention. Various types of filter characteristics may be employed in order to achieve the aim of the present invention. Preferably, the filter has unity gain up to the Nyquist frequency and a certain damping characteristics beyond that frequency. The optimum damping factor for frequencies beyond the Nyquist frequency may depend on the image content. Preferably, the damping is just strong enough so as to prevent visible artifacts in the low-resolution images. Otherwise, damping is preferably as weak as possible, i.e., the damping factor should be below but close to unity, in order to leverage super-resolution interpolation. Experiments have shown that the damping factor for frequencies beyond the Nyquist frequency is preferably about 0.1 to 0.5.

As explained above, the filtering characteristics of the de-attenuation filter is inverse to the aliasing control filter. Hence, the de-attenuation filter has unity gain up to the Nyquist frequency and a certain emphasizing characteristics beyond that frequency. Preferably, the gain beyond the Nyquist frequency is about 2 to 10 in accordance with the damping factor of the aliasing control filter.

Technically, both the aliasing control filter and the de-attenuation filter are implemented preferably as finite impulse response filters. Figure 11 shows two examples of 9-tap aliasing control filters with damping factor 0.4 (1101 a in Fig. 11 a) and 0.2 (1101 b in Fig. 11 b), respectively, as well as the corresponding ideal de-attenuation filters (1102a, 1102b) and their finite (9-tap or 11-tap) implementations (dashed lines in Figs. 11 a and 11 b).

So far, the invention has been explained in terms of acquiring, processing, and reproducing single images. However, this invention is not restricted to single-image applications but rather may also be applied to acquisition, processing and reproduction of sequences of images, i.e., to video applications, or to multiview images, i.e., to images or videos recorded simultaneously from the same scene but from different angles.

A preferred embodiment of the present invention in the context of video processing is explained next with reference to Figs. 12 and 13.

Figure 12 is a block diagram of a hierarchical video encoder in accordance with the present invention. A digital input video signal 102 is passed through an aliasing control filter 110 in order to control the amount of aliasing artifacts produced by a subsequent down-sampling step performed in down-sampling unit 121. The down-sampling unit 121 outputs a digital video signal with a resolution lower than the resolution of the input video signal. The down-sampled video signal might be particularly adapted for being displayed on a mobile device with limited displaying capabilities. The down-sampled video signal is then encoded by encoder 151 in order to obtain a first compressed video signal. The encoder may be any of the standard transform-based video encoders conforming to MPEG II or H.264/AVC standard. The present invention, however, is not restricted to the specific type of encoder. Rather, the invention can be realized with any type of encoder that is encoding a video signal into a digital bitstream.

The compressed low-resolution video signal is output as a first output signal 195. A copy of this output signal is also fed into an internal decoder 153 in order to generate an internal reference video signal. This reference signal is fed to a super-resolution interpolation unit 160 followed by a de-attenuation filter 170 in order to reconstruct a high-resolution video signal from the compressed low-resolution video signal 195. The resolution of the reconstructed signal preferably matches the resolution of the input signal 102.

Due to the employment of super-resolution interpolation techniques, the up-sampling achieved by the super-resolution interpolation unit 160 cannot be performed on a frame-by-frame basis as it would be possible in conventional interpolation-based up-sampling. Instead, the reconstruction is based on a plurality of images taken from a sequence of consecutive frames. Nevertheless, the reconstruction can be performed on a macro block level, i.e., the plurality of images may correspond to a plurality of macro blocks from consecutive frames. Further, the super-resolution interpolation may exploit motion vector data derived by a motion detection/compensation unit that is generally part of video encoders. Preferably, the motion vector (MV) detected by the first encoder 151 or the decoder 153 is used for the super-resolution interpolation. Alternatively, more precise motion vectors may be estimated by the super-resolution interpolation unit 160 itself.

A signal adding means 154 is employed to subtract the reconstructed signal from the input signal 102 in order to generate a difference signal comprising the image information that could not be reconstructed from the compressed low-resolution video signal. The difference signal is fed to a second encoder 152 of a similar kind as the first encoder 151 in order to encode the difference signal into a second output signal 196.

The input signal 102 has thus been encoded into two compressed video signals; the first signal containing video information at a reduced resolution, the second signal containing the differences between the original video signal and a video signal reconstructed from the low-resolution signal by means of super-resolution interpolation and de-attenuation. The first signal is self-contained in the sense that it may be decoded independently yielding an image quality that is adapted, for instance, to mobile communication devices with limited displaying and/or computing capabilities. For this purpose, image quality can be optimized by means of the aliasing control filter that reduces the amount of aliasing artifacts.

Both output signals 195 and 196 may be multiplexed into a single bitstream thus forming a hierarchically coded compressed video signal corresponding to the input signal 102. The multiplexed bitstream may then be transmitted or recorded irrespective of the displaying capabilities or preferences of a decoder. The multiplexed bitstream thus represents the input signal at full resolution. Due to the super-resolution interpolation and de-attenuation processing, however, redundancies related to the high resolution have been eliminated thus enabling a high compression ratio without adversely affecting image quality.

The aliasing control filter thus allows optimization of the image quality of the low-resolution version of the video data on the one hand, and the overall coding efficiency of the full-resolution video data on the other hand. The stronger the damping of image frequencies beyond the Nyquist frequency of the down-sampling means, the better the image quality of the low-resolution version since aliasing artifacts are suppressed. However, a too little amount of aliasing components impairs super-resolution interpolation and thus deteriorates the prediction of the high-resolution video data from the low-resolution version. This leads to a larger difference signal at the signal adding means and thus to more data that has to encoded in the second bitstream.

Figure 13 exhibits a block diagram of a decoder in accordance with the present invention. The first and the second signal (195, 196) output by the encoder are fed into respective decoders 156 and 157. The output 198 of the first decoder 156 thus corresponds to the low-resolution version of the encoded video signal 102. The output of the first decoder 156 is also fed into a super-resolution interpolation unit 160 followed by de-attenuation filter 170 in order to reconstruct a high-resolution video signal from the low-resolution version. Preferably, the motion vector information (MV) required for decoding the first bitstream is also fed to the super-resolution interpolation unit 160. Alternatively, more precise motion vectors may be estimated by the super-resolution interpolation unit 160 itself. This information may be exploited for registering the low-resolution images to the high-resolution grid as explained in conjunction with Fig. 5. The output of the second decoder 157 containing high-resolution corrections is added to the reconstructed high-resolution video signal by means of signal adder 155. This yields the decompressed video signal 199 corresponding to the video signal 102 that has been encoded in the first place.

Depending on the displaying and computing capabilities of the decoding device, only the decoder 156 needs to be implemented in case that a low-resolution version of the video signal suffices. This translates into a reduction of cost for production and operation of the devices as well as in a reduction of circuit scale, etc. On the other hand, the very same multiplexed bitstream may be decoded by high-quality decoding devices so as to reproduce the video signal at full resolution. Due to the super-resolution and de-attenuation processing, redundancies within the video data have been significantly reduced thus leading to an improved coding efficiency. The high-quality decoding device may thus reproduce the video signal by receiving and processing a fewer amount of encoded data than decoding devices operating with conventional video encoding schemes.

As explained above, the optimum filter characteristics of the aliasing control filter may depend on the image content. Hence, it is advantageous to adapt the filtering characteristics of the aliasing control filter 110 to the image content of the video input 102 in order to ensure that visible artifacts in the down-sampled video images are suppressed while enough information remains available for super-resolution interpolation. Consequently, the filtering characteristics of the de-attenuation filter 170 is preferably adapted as well. In a preferred embodiment, the video image is hence analyzed by an image analyzer (not shown) for setting the filter characteristics of the aliasing-control filter 110 and the de-attenuation filter 170 in real-time.

The optimum damping factor of the aliasing control filter may, for instance, depend on the amount of fine details contained within the input video. Especially those details with image frequencies close to the Nyquist frequency are particularly sensitive to aliasing artifacts. The damping factor of the aliasing control filter may thus be controlled in accordance with the spectral power of the input video signal in a frequency range close to the Nyquist frequency.

In the setup of video encoder and decoder shown in Figs. 12 and 13 the filtering characteristics that is employed by the de-attenuation filter unit 170 in the encoder has to be signaled to the decoder. The filtering characteristics of the de-attenuation filter 170 of the decoder can thus be adapted accordingly in order to reproduce the high-resolution output video 199.

Signaling of the filtering characteristics is performed by inserting signaling information in the second bitstream 196. The signaling information may comprise a full definition of the filter, e.g. in form of filter coefficients such as those of a finite impulse response filter, or certain parameters such as damping factor and threshold frequency.

Summarizing, the present invention relates to an image acquisition and reproduction system considering super-resolution interpolation of acquired images. By providing an aliasing control filter for controlling aliasing artifacts rather than removing them, an improved image quality is achieved while leaving the option for reconstructing high-resolution images by means of super-resolution interpolation techniques. A preferred embodiment of the present invention relates to hierarchical video data compression and decompression with improved coding efficiency. The video data is encoded into two bitstreams. The first bitstream is a self-contained representation of a low-resolution version of the video data. The second bitstream only contains the difference between the full-resolution video data and its super-resolution reconstruction.

## Claims

1. An image acquisition and reproduction apparatus comprising:
a sampling means (120) for sampling input images (101) with a predefined sampling resolution in order to obtain a plurality of low-resolution digital images (510);
an output unit for outputting the plurality of low-resolution digital images (510);
**characterized by**
an aliasing control filter (110) for filtering the input images (101) prior to sampling in order to attenuate image frequencies higher than the Nyquist frequency of the predefined sampling resolution;
a super-resolution reconstruction means (160) for reconstructing a high-resolution digital image (530) from the plurality of low-resolution digital images (510), the reconstructed high-resolution digital image (530) having a reconstruction resolution that is higher than the predefined sampling resolution; and wherein
the output unit is outputting either one of the high-resolution digital image (530) and the plurality of low-resolution digital images (510).

2. An image acquisition and reproduction apparatus according to claim 1, further comprising a de-attenuation filter (170) with a filter characteristics inverse to the aliasing control filter (110) for amplifying image frequencies of the high-resolution digital image (530) that have been attenuated by the aliasing control filter (110).

3. An image acquisition and reproduction apparatus according to claim 1 or 2, wherein a filtering characteristics of the aliasing control filter (110) is set adaptively to a content of the input images (101).

4. An image acquisition and reproduction apparatus according to any of claims 1 to 3, wherein the plurality of low-resolution digital images (510) corresponds to a video sequence.

5. An image acquisition and reproduction apparatus according to claim 4 wherein the super-resolution reconstruction means (160) is reconstructing a plurality of high-resolution digital images, said plurality of high-resolution digital images corresponding to a high-resolution reconstruction of the video sequence.

6. A video encoding apparatus for encoding an input video signal, comprising
a down-sampling means (121) for down-sampling the spatial resolution of the input video signal (102) to a predefined sampling resolution;
a first encoder (151) for encoding the down-sampled video signal into a first bitstream (195) corresponding to a low-resolution version of the input video signal (102) and for outputting the first bitstream (195) as a first output of the video encoding apparatus;
a decoder (153) for decoding the first bitstream (195);
an up-sampling means for creating a reconstructed high-resolution video signal from the decoded first bitstream (195), the reconstructed high-resolution video signal having a reconstruction resolution that is equal to the resolution of the input video signal (102);
a subtracting means (154) for subtracting the reconstructed high-resolution video signal from the input video signal (102) and for outputting a difference signal; and
a second encoder (152) for encoding the difference signal into a second bitstream (196) and for outputting the second bitstream (196) as a second output of the video encoding apparatus;
**characterized by**
an aliasing control filter (110) for filtering the input video signal (102) prior to the down-sampling in order to attenuate image frequencies higher than the Nyquist frequency of the predefined sampling resolution; and
the up-sampling means being a super-resolution reconstruction means (160) for reconstructing the high-resolution video signal from the decoded first bitstream (195).

7. A video encoding apparatus according to claim 6, further comprising
a de-attenuation filter (170) with a filter characteristics inverse to the aliasing control filter (110) for amplifying image frequencies of the high-resolution video signal that have been attenuated by the aliasing control filter (110); and
wherein the subtracting means (154) is subtracting the output of the de-attenuation filter (170) from the input video signal (102) in order to output the difference signal.

8. A video encoding apparatus according to claim 6 or 7, wherein a filtering characteristics of the aliasing control filter (110) is set adaptively to a content of the input video signal (102).

9. A video encoding apparatus according to any of claims 6 to 8, wherein information of the filtering characteristics of the aliasing control filter (110) is signaled to a decoder.

10. A video encoding apparatus according to claim 9, wherein the information of the filtering characteristics is inserted in the second bitstream (196).

11. A video encoding apparatus according to claim 9 or 10, wherein the information of the filtering characteristics comprises a list of filter coefficients.

12. A video encoding apparatus according to claim 9 or 10, wherein the information of the filtering characteristics comprises a threshold frequency and a damping factor.

13. A video encoding apparatus according to any of claims 6 to 12, wherein motion vector information (MV) detected by the decoder (153) is fed to the super-resolution reconstruction means (160) as an input for reconstructing the high-resolution video signal.

14. A video encoding apparatus according to any of claims 6 to 13, further comprising a bitstream multiplexer for multiplexing the first and the second bitstream (195, 196) into an output bitstream representing the input video signal (102).

15. A video encoding apparatus according to any of claims 6 to 14, wherein at least one of the first and the second encoder (151, 152) encodes an input signal into a bitstream according to a transform-based video compressing standard.

16. A video decoding apparatus for decoding an encoded video signal, comprising
a first decoder (156) for decoding a first bitstream (195) representing a low resolution version of the encoded video signal and for outputting a first decoded video signal (198);
an up-sampling means for creating a reconstructed high-resolution video signal from the first decoded video signal (198), the reconstructed high-resolution video signal having a reconstruction resolution that is equal to the resolution of the encoded video signal;
a second decoder (157) for decoding a second bitstream (196) representing a difference signal and for outputting the difference signal; and
an adding means (155) for adding the reconstructed high-resolution video signal and the difference signal and for outputting a second decoded video signal (199);
**characterized by**
the up-sampling means being a super-resolution reconstruction means (160) for reconstructing the high-resolution video signal from the first decoded video signal (198).

17. A video decoding apparatus according to claim 16, further comprising
a de-attenuation filter (170) with a filter characteristics that is adapted for amplifying image frequencies of the high-resolution video signal that have been attenuated by an aliasing control filter (110) of an encoder; and
wherein the adding means (155) is adding the output of the de-attenuation filter (170) and the difference signal in order to output the second decoded video signal (199).

18. A video decoding apparatus according to claim 17, wherein the filtering characteristics of the de-attenuation filter (170) is set in accordance to information of the filtering characteristics signaled by the encoder.

19. A video decoding apparatus according to claim 18, wherein the information of the filtering characteristics is extracted from the second bitstream (196).

20. A video decoding apparatus according to claim 18 or 19, wherein the information of the filtering characteristics comprises a list of filter coefficients.

21. A video decoding apparatus according to claim 18 or 19, wherein the information of the filtering characteristics comprises a threshold frequency and a damping factor.

22. A video decoding apparatus according to any of claims 16 to 21, wherein motion vector information (MV) detected by the first decoder (156) is fed to the super-resolution reconstruction means (160) as an input for reconstructing the high-resolution video signal.

23. A video decoding apparatus according to any of claims 16 to 22, further comprising a bitstream de-multiplexer for de-multiplexing an input bitstream representing the encoded video signal into the first and the second bitstream (195, 196).

24. A video decoding apparatus according to any of claims 16 to 23, wherein at least one of the first and the second decoder (156, 157) decodes an input bitstream according to a transform-based video compressing standard.

25. An image acquisition and reproduction method comprising the steps of:
sampling input images (101) with a predefined sampling resolution in order to obtain a plurality of low-resolution digital images (510);
outputting the plurality of low-resolution digital images (510);
**characterized by**
filtering the input images (101) prior to sampling in order to attenuate image frequencies higher than the Nyquist frequency of the predefined sampling resolution;
super-resolution reconstructing a high-resolution digital image (530) from the plurality of low-resolution digital images (510), the reconstructed high-resolution digital image (530) having a reconstruction resolution that is higher than the predefined sampling resolution; and wherein
the outputting step is outputting either one of the high-resolution digital image (530) and the plurality of low-resolution digital images (510).

26. An image acquisition and reproduction method according to claim 25, further comprising the step of amplifying image frequencies of the high-resolution digital image (530) that have been attenuated by the step of filtering, wherein a frequency characteristic of the amplifying step is inverse to a frequency characteristic of the filtering step.

27. An image acquisition and reproduction method according to claim 25 or 26, wherein the step of filtering is performed adaptively to a content of the input images (101).

28. An image acquisition and reproduction method according to any of claims 25 to 27, wherein the plurality of low-resolution digital images (510) corresponds to a video sequence.

29. An image acquisition and reproduction method according to claim 28 wherein the step of super-resolution reconstruction is reconstructing a plurality of high-resolution digital images, said plurality of high-resolution digital images corresponding to a high-resolution reconstruction of the video sequence.

30. A video encoding method for encoding an input video signal, comprising the steps of:
down-sampling the spatial resolution of the input video signal (102) to a predefined sampling resolution;
encoding the down-sampled video signal into a first bitstream (195) corresponding to a low-resolution version of the input video signal (102) and outputting the first bitstream (195);
decoding the first bitstream (195);
creating a reconstructed high-resolution video signal from the decoded first bitstream (195), the reconstructed high-resolution video signal having a reconstruction resolution that is equal to the resolution of the input video signal (102);
subtracting the reconstructed high-resolution video signal from the input video signal (102) and outputting a difference signal; and
encoding the difference signal into a second bitstream (196) and outputting the second bitstream (196);
**characterized by**
filtering the input video signal (102) prior to the step of down-sampling in order to attenuate image frequencies higher than the Nyquist frequency of the predefined sampling resolution; and
the step of creating the high-resolution video signal being a super-resolution reconstruction step, reconstructing the high-resolution video signal from the decoded first bitstream (195).

31. A video encoding method according to claim 30, further comprising the step of
amplifying image frequencies of the high-resolution video signal that have been attenuated by the step of filtering, wherein a frequency characteristic of the amplifying step is inverse to a frequency characteristic of the filtering step; and wherein
the step of subtracting is subtracting the result of the step of amplifying from the input video signal (102).

32. A video encoding method according to claim 30 or 31, wherein the step of filtering is performed adaptively to a content of the input video signal (102).

33. A video encoding method according to any of claims 30 to 32, further comprising the step of signaling information of a filtering characteristics employed by the step of filtering to a decoder.

34. A video encoding method according to claim 33, wherein the information of the filtering characteristics is inserted in the second bitstream (196).

35. A video encoding method according to claim 33 or 34, wherein the information of the filtering characteristics comprises a list of filter coefficients.

36. A video encoding method according to claim 33 or 34, wherein the information of the filtering characteristics comprises a threshold frequency and a damping factor.

37. A video encoding method according to any of claims 30 to 36, wherein motion vector information (MV) detected in the step of decoding is used in the super-resolution reconstruction step as an input for reconstructing the high-resolution video signal.

38. A video encoding method according to any of claims 30 to 37, further comprising the step of multiplexing the first and the second bitstream (195, 196) into an output bitstream representing the input video signal (102).

39. A video encoding apparatus according to any of claims 30 to 38, wherein at least one of the first and the second step of encoding encodes an input signal into a bitstream according to a transform-based video compressing standard.

40. A video decoding method for decoding an encoded video signal, comprising the steps of:
decoding a first bitstream (195) representing a low resolution version of the encoded video signal and outputting a first decoded video signal (198);
creating a reconstructed high-resolution video signal from the first decoded video signal (198), the reconstructed high-resolution video signal having a reconstruction resolution that is equal to the resolution of the encoded video signal;
decoding a second bitstream (196) representing a difference signal and outputting the difference signal; and
adding the reconstructed high-resolution video signal and the difference signal and outputting a second decoded video signal (199);
**characterized by**
the step of creating the high-resolution video signal being a super-resolution reconstruction step, reconstructing the high-resolution video signal from the first decoded video signal (198).

41. A video decoding method according to claim 40, further comprising the step of
amplifying image frequencies of the high-resolution video signal that have been attenuated by an aliasing control filter (110) of an encoder, wherein a frequency characteristic of the amplifying step is adapted to a frequency characteristic of the aliasing control filter (110) of the encoder; and wherein
wherein the step of adding is adding the result of the amplifying step and the difference signal.

42. A video decoding method according to claim 41, wherein the frequency characteristic employed by the amplifying step is set in accordance to information of the frequency characteristics signaled by the encoder.

43. A video decoding method according to claim 42, further comprising the step of extracting the information of the frequency characteristics from the second bitstream (196).

44. A video decoding method according to claim 42 or 43, wherein the information of the frequency characteristics comprises a list of filter coefficients.

45. A video decoding method according to claim 42 or 43, wherein the information of the frequency characteristics comprises a threshold frequency and a damping factor.

46. A video decoding method according to any of claims 40 to 45, wherein motion vector information (MV) detected in the step of decoding the first bitstream (195) is used in the super-resolution reconstruction step as an input for reconstructing the high-resolution video signal.

47. A video decoding method according to any of claims 40 to 46, further comprising the step of de-multiplexing an input bitstream representing the encoded video signal into the first and the second bitstream (195, 196).

48. A video decoding method according to any of claims 40 to 47, wherein at least one of the steps of decoding the first and the second bitstream (195, 196) decodes an input bitstream according to a transform-based video compressing standard.
